# EUROPÄISCHE PATENTSCHRIFT

(11) **EP 0 859 803 B1**
(45) Veröffentlichungstag und Bekanntmachung des Hinweises auf die Patenterteilung: **01.12.1999**
(21) Anmeldenummer: 97919315.8
(22) Anmeldetag: 03.04.1997
(51) Int. Cl.: C08F 297/04

(54) **THERMOPLASTISCHE FORMMASSE**
THERMOPLASTIC MOULDING COMPOUND
MATIERE DE MOULAGE THERMOPLASTIQUE

(30) Priorität: 19.04.1996 DE 19615533
(43) Veröffentlichungstag der Anmeldung: 26.08.1998
(73) Patentinhaber: BASF AKTIENGESELLSCHAFT, 67056 Ludwigshafen (DE)
(72) Erfinder: KNOLL, Konrad, D-67069 Ludwigshafen (DE); GAUSEPOHL, Hermann, D-67112 Mutterstadt (DE); NIESSNER, Norbert, D-67159 Friedelsheim (DE); NAEGELE, Paul, D-67166 Otterstadt (DE); FISCHER, Wolfgang, D-67067 Ludwigshafen (DE)
(86) Internationale Anmeldenummer: EP9701670
(87) Internationale Veröffentlichungsnummer: WO9740079

(56) Entgegenhaltungen:
- DE-A- 4 420 952
- US-A- 5 385 994
- ADVANCES IN ELASTOMERS AND RUBBER ELASTICITY, 1986, NEW-YORK & LONDON, Seiten 129-142, XP000677016 L. TUNG ET AL.: "diene triblock polymers with styrene-alpha-methylstyrene copolymer end blocks"
- POLYMERIC MATERIALS SCIENCE & ENGINEERING, Bd. 73, 1995, Seiten 535-536, XP000676905 J. AYALA ET AL.: "polystyrene block and vinyl microstructure of styrene-butadiene copolymers synthesized with THF and TMEDA"

## Beschreibung

Blockcopolymere von Vinylaromaten (z.B. Styrol) und Dienen (z.B. Butadien) sind Copolymere aus mehreren aneinandergereihten oder sonstwie verknüpften Polymermolekül-Bereichen (sog. Blöcken), die in sich mehr oder weniger einheitlich aufgebaut sind. Sie können je nach Struktur und Gehalt an Dienmonomeren - bei einer bestimmten Temperatur - insgesamt elastomere, d.h. kautschukelastische Eigenschaften oder steife, nicht-kautschukelastische Eigenschaften haben, d.h. sie verhalten sich nach außen hin insgesamt entweder kautschukelastisch, ähnlich wie ein Polydien und haben z.B. als sog. SB-Rubber Bedeutung, oder wie transparente, schlagzähe Styrolpolymere. Es ist üblich, in Anlehnung an die Bezeichnungen beim schlagzäh modifizierten Polystyrol diejenigen Molekülteile, die das kautschukelastische Verhalten bestimmen, als Weichphase und die starren Molekülteile (den reinen Polystyrolanteil) als Hartphase zu bezeichnen. SB-Rubber müssen wie gewöhnliche Dienpolymere zum Gebrauch vulkanisiert werden, was ihre Verwendung stark einschränkt und die Verarbeitung verteuert.

Die Erfindung betrifft normalerweise transparente, rein thermoplastisch verarbeitbare Blockcopolymere von Vinylaromaten und Dienen mit elastomerem Verhalten und besonderen mechanischen und verbesserten thermischen Eigenschaften.

Hierzu ist folgendes vorauszuschicken:

Die zu sog. lebenden Polymeren (living polymers) führende anionische Polymerisation, bei der das Wachstum eines Kettenmoleküls an einem Kettenende stattfindet, das mangels spontaner Kettenabbruch- oder übertragungsreaktion theoretisch beliebig lange lebt (polymerisationsfähig bleibt), und die Umsetzung des lebenden Polymeren mit ein- oder mehrfunktionellen Reaktionspartnern bietet bekanntlich eine vielseitig verwendbare Möglichkeit zum Aufbau von Blockcopolymeren, wobei die Auswahl an Monomeren allerdings beschränkt ist; in der Praxis haben nur Blockcopolymere von vinylaromatischen Verbindungen, also Styrol und seinen Abkömmlingen einerseits und Dienen, im wesentlichen Butadien oder Isopren andererseits Bedeutung erlangt. Blockcopolymere erhält man dadurch, daß jeweils bis annähernd zur Erschöpfung eines Monomerenvorrats polymerisiert und das oder die Monomeren dann gewechselt werden. Dieser Vorgang ist mehrfach wiederholbar.

Lineare Blockcopolymere werden z.B. in den US-PSen 3 507 934 und 4 122 134 beschrieben. Sternförmige Blockcopolymere sind z.B. aus den US-PSen 4 086 298; 4 167 545 und 3 639 517 bekannt.

Das Eigenschaftsprofil dieser Blockcopolymeren wird wesentlich durch den Gehalt einpolymerisierter Dienmonomerer, d.h. Länge, Anordnung und Mengenverhältnis von Polydien- und Polystyrol-Blöcken geprägt. Darüberhinaus spielt die Art und Weise des Übergangs zwischen unterschiedlichen Blöcken eine wichtige Rolle. Der Einfluß scharfer und sog. verschmierter (tapered) Übergänge (je nachdem, ob der Monomerenwechsel abrupt oder allmählich stattfindet) ist in der DE-A1-44 20 952 ausführlich erörtert, sodaß hier auf eine nochmalige Darstellung verzichtet werden kann.

Es soll lediglich daran erinnert werden, daß bei Blockcopolymeren mit verschmiertem Blockübergang die Sequenzlängen keineswegs statistisch verteilt sind, sondern daß die Sequenzlänge der reinen Dienphase gegenüber der Polystyrolphase und somit das Volumenverhältnis zugunsten der Dienphase verschoben ist. Dies hat den Nachteil, daß sich die negativen Eigenschaften des Dien-Polymeren bei der Verarbeitung im Werkstoffverhalten unnötig stark bemerkbar machen.

Besonders Materialien mit einem Dien-Gehalt von über 35 Gew.%, die aufgrund ihres Eigenschaftsprofils (Zähigkeit, Transparenz, Gasdurchlässigkeit) für medizintechnische Anwendungen wie Infusionsschläuche, Infusionstropfkammern und Dehnfolien geeignet wären, sind nur sehr schwierig durch Profilextrusion, Spritzguß oder Schlauchfolienextrusion zu verarbeiten; sie sind trotz Stabilisierung mit Antioxidantien und Radikalfängern thermisch sehr empfindlich und neigen zur Klebrigkeit, so daß man sich aufwendig mit Additiven behelfen muß. Das sog. Blocken (Verkleben von Folien und Schläuchen auf der Rolle) und schlechte Entformbarkeit können die Verarbeitung durch Spritzguß gänzlich unmöglich machen.

Die DE-A1-44 20 952 hat hierzu vorgeschlagen, ein kautschukelastisches Blockcopolymerisat herzustellen, das aus mindestens einem einpolymerisierte Einheiten eines vinylaromatischen Monomeren aufweisenden, eine Hartphase bildenden Block A und/oder einem Dienmonomere aufweisenden, eine erste kautschukelastische (Weich)-Phase bildenden Block B und mindestens einem einpolymerisierte Einheiten eines vinylaromatischen Monomeren sowie eines Diens aufweisenden elastomeren, eine - gegebenenfalls weitere - Weichphase bildenden Block (B/A) besteht, wobei die Glastemperatur Tg des Blocks A über 25°C und die des Blocks (B/A) unter 25°C liegt und das Phasenvolumen-Verhältnis von Block A zu Block (B/A) so gewählt ist, daß der Anteil der Hartphase am gesamten Blockcopolymerisat 1-40 Vol.-% und der Gewichtsanteil des Diens weniger als 50 Gew.-% beträgt. Diese Blockcopolymerisate bedeuten bereits einen erheblichen Fortschritt gegenüber den bis dahin bekannten Blockcopolymeren mit verschmierten Blockübergängen.

Auch Materialien mit einem Dien-Gehalt bis zu 35 % tendieren jedoch bei längerer thermischer Belastung und Scherbeanspruchung, wie sie vor allem bei der Extrusion vorkommen, nach wie vor zu Gelbildung (Vernetzung über die olefinisch ungesättigten Kettenelemente). Insbesondere bei der Herstellung von Folien können sich Gelanteile als sogenannte "Stippen" störend bemerkbar machen. Die Vernetzungsneigung wird vor allem den in Polydienen vorhandenen Kurzkettenverzweigungen, also Seitenketten der Struktur 〉CH-CH=CH₂ zugeschrieben.

Die Erfindung hat sich die Aufgabe gestellt, durch geeignete Wahl der molekularen Struktur zu elastomeren, also sich kautschukelastisch verhaltenden Blockcopolymeren zu gelangen, die großtechnisch einfach herstellbar sind, bei niedrigem Diengehalt ein Maximum an Zähigkeit besitzen und wie Thermoplaste auf Extrudern und Spritzgußmaschinen einfach und insbesondere ohne störende Stippenbildung zu verarbeiten sind.

Erfindungsgemäß wird dies, allgemein ausgedrückt, dadurch möglich, daß man in einem Vinylaromat-Dien-Blockcopolymerisat aus Blöcken, die eine Hartphase (Blocktyp A) und solchen, die eine Weichphase bilden, an die Stelle eines reinen Polydienblocks (Blocktyp B) als Weichphase einen Block (B/A) aus Dien- und Vinylaromaten-Einheiten treten läßt, der streng statistischen Aufbau besitzt, wobei der relative Anteil an 1,2-Verknüpfungen des Polydiens, bezogen auf die Summe an 1,2- und 1,4-cis/trans-Verknüpfungen in jedem Fall unterhalb von etwa 12 bis 15 % liegt. Der Aufbau kann dabei entlang der Kette im statistischen Mittel homogen oder inhomogen sein.

Unmittelbarer Erfindungsgegenstand ist ein kautschukelastisches Blockcopolymerisat aus mindestens einem einpolymerisierte Einheiten eines vinylaromatischen Monomeren aufweisenden, eine Hartphase bildenden Block A und mindestens einem einpolymerisierte Einheiten eines vinylaromatischen Monomeren sowie eines Diens aufweisenden elastomeren, eine Weichphase bildenden Block (B/A), wobei die Glastemperatur Tg des Blocks A über 25°C und die des Blocks (B/A) unter 25°C liegt und das Phasenvolumen-Verhältnis von Block A zu Block (B/A) so gewählt ist, daß der Anteil der Hartphase am gesamten Blockcopolymerisat 1 bis 40 Vol.-% und der Gewichtsanteil des Diens weniger als 50 Gew.-% beträgt, wobei der relative Anteil an 1,2-Verknüpfungen des Polydiens, bezogen auf die Summe an 1,2- und 1,4-cis/trans-Verknüpfungen unterhalb von etwa 12 bis 15% liegt.

Bevorzugt wird das vinylaromatische Monomere ausgewählt aus Styrol, α-Methylstyrol, Vinyltoluol und 1,1-Diphenylethylen und das Dien aus Butadien und Isopren.

Man erhält ein solches erfindungsgemäßes kautschukelastisches Blockcopolymerisat mit reduzierter Vernetzungsneigung dadurch, daß im Rahmen der vorstehenden Parameter die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines in unpolaren Lösungsmitteln löslichen Kaliumsalzes. Die statistische Copolymerisation von Styrol und Butadien in Cyclohexan in Gegenwart von löslichen Kaliumsalzen wird von S.D.Smith, A. Ashraf und Mitarbeitern in Polymer Preprints 34(2), 672 (1993) und 35(2), 466 (1994) beschrieben. Als lösliche Kaliumsalze werden Kalium-2,3-dimethyl-3-pentanolat und Kalium-3-ethyl-3-pentanolat erwähnt.

Prinzipiell ist es bereits möglich, durch Zusatz von polaren, koordinierenden Lösungsmitteln, wie in der DE-A1-44 20 952 beschrieben, statistische Copolymere zu erzeugen, die jedoch einen höheren Anteil an 1,2-Verknüpfungen zur Folge haben. Der erfindungsgemäße Unterschied zur dort beschriebenen Methode besteht nun darin, daß das Verhältnis der 1,2- zu den 1,4-Verknüpfungen des Diens durch den Zusatz des Kaliumsalzes nicht verändert wird. Der relative Anteil an der 1,2-Vinyl-Struktur bleibt beim Zusatz der Kaliumsalzmenge, die zur streng statistischen Copolymerisation von z.B. Styrol und Butadien benötigt wird, unter 15, im günstigen Falle unter etwa 11 bis 12%, bezogen auf die Summe von 1,2-Vinyl- und 1,4-cis-/trans-Mikrostruktur. Bei mit Butyllithium initiierter Polymerisation in Cyclohexan liegt in diesem Fall das Molverhältnis von Lithium zu Kalium bei etwa 10:1 bis 40:1. Wird entlang des statistischen Blocks ein Zusammensetzungsgradient (d.h. eine sich im Rahmen der Erfindung von Butadien nach Styrol mehr oder weniger gleitend sich ändernde Zusammensetzung) gewünscht, sind Li/K-Verhältnisse größer als 40 zu 1 zu wählen; bei einem Gradienten von Styrol nach Butadien Verhältnisse kleiner 10:1.

Ein erfindungsgemäßes Blockcopolymerisat kann z.B. durch eine der allgemeinen Formeln 1 bis 11 dargestellt werden:
(1) (A-(B/A))ₙ;
(2) (A-(B/A))ₙ-A;
(3) (B/A)-(A-(B/A))ₙ;
(4) X-[(A-(B/A))ₙ]ₘ+1;
(5) X-[((B/A)-A)ₙ]ₘ+1;
(6) X-[(A-(B/A))ₙ-A]ₘ+1;
(7) X-[((B/A)-A)ₙ-(B/A)]ₘ+1;
(8) Y-[(A-(B/A))ₙ]ₘ+1;
(9) Y-[((B/A)-A)ₙ]ₘ+1;
(10) Y-[(A-(B/A))ₙ-A]ₘ+1;
(11) Y-[((B/A)-A)ₙ-(B/A)]ₘ+1;
wobei A für den vinylaromatischen Block und (B/A) für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Bevorzugt ist ein Blockcopolymerisat einer der allgemeinen Formeln A-(B/A)-A, X-[-(B/A)-A]₂ und Y-[-(B/A)-A]₂ (Bedeutung der Abkürzungen wie vorstehend) und besonders bevorzugt ein Blockcopolymerisat, dessen Weichphase unterteilt ist in Blöcke
(12) (B/A)₁-(B/A)₂;
(13) (B/A)₁-(B/A)₂-(B/A)₁;
(14) (B/A)₁-(B/A)₂-(B/A)₃;
wobei die Blöcke unterschiedlich aufgebaut sind bzw. sich deren Vinylaromat/Dien-Verhältnis in den einzelnen Blöcken (B/A) derart ändert, daß in jedem Teilabschnitt (Teilblock) ein Zusammensetzungsgradient (B/A)ₚ₁ << (B/A)ₚ₂ << (B/A)_{p3 .......} vorkommt, wobei die Glasübergangstemperatur T_{g} jedes Teilblocks unter 25°C liegt. Solche Blockcopolymerisate, die innerhalb eines Blocks (B/A) z.B. p sich wiederholende Abschnitte (Teilblöcke) mit wechselndem Monomeraufbau aufweisen, können durch p-portionsweise Zugabe der Monomeren gebildet werden, wobei p eine ganze Zahl zwischen 2 und 10 bedeutet (vgl. auch die nachstehenden Beispiele). Die portionsweise Zugabe kann z.B. dazu dienen, den Wärmehaushalt im Reaktionsgemisch zu kontrollieren.

Ein Blockcopolymerisat, das mehrere Blöcke (B/A) und/oder A mit jeweils unterschiedlicher Molmasse je Molekül aufweist, ist ebenfalls bevorzugt.

Bevorzugte Ausführungsformen der Erfindung finden sich in den abhängigen Ansprüchen.

Erfindungsgemäße Blockcopolymerisate eignen sich hervorragend zur Herstellung von kautschukelastischen Formteilen mit den üblichen Methoden der Thermoplastverarbeitung, z.B. als Folie, Schaum, Thermoformling, Spritzgußformling oder Profilextrudat.

Bevorzugt als vinylaromatische Verbindung im Sinne der Erfindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen Äquivalente von Styrol und Butadien muß man ggf. die Angaben entsprechend umrechnen.

Der (B/A)-Block wird z.B. aus 75-40 Gew.-% Styrol und 25-60 Gew.-% Butadien aufgebaut. Besonders bevorzugt hat ein Weichblock einen Butadienanteil zwischen 35 und 70% und einen Styrolanteil zwischen 65 und 30%.

Der Gewichtsanteil des Diens im gesamten Blockcopolymer liegt im Falle der Monomerkombination Styrol/Butadien bei 15-65 Gew.-%, derjenige der vinylaromatischen Komponente entsprechend bei 85-35 Gew.-%. Besonders bevorzugt sind Butadien-Styrol-Blockcopolymere mit einer Monomerzusammensetzung aus 25-60 Gew.-% Dien und 75-40 Gew.-% an vinylaromatischer Verbindung.

Die Blockpolymeren werden durch anionische Polymerisation in einem unpolaren Lösungsmittel hergestellt, wobei die Initiierung mittels Lithiumalkyl erfolgt. Beispiele für Initiatoren sind Methyllithium, Ethyllithium, Propyllithium, n-Butyllithium, sek. Butyllithium und tert. Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0.002 bis 5 Mol-%, wenn man sie auf die Monomeren bezieht. Als Lösungsmittel werden bevorzugt aliphatische Kohlenwasserstoffe wie Cyclohexan oder Methylcyclohexan verwendet.

Erfindungsgemäß werden die statistischen, gleichzeitig Vinylaromat und Dien enthaltenden Blöcke der Blockcopolymeren unter Zusatz eines löslichen Kaliumsalzes, insbesondere eines Kaliumalkoholates, hergestellt. Es besteht dabei die Vorstellung, daß das Kaliumsalz mit dem Lithium-Carbanion-Ionenpaar einen Metallaustausch eingeht, wobei sich Kalium-Carbanionen bilden, die bevorzugt Styrol anlagern, während Lithium-Cabanionen bevorzugt Butadien addieren. Weil Kalium-Carbanionen wesentlich reaktiver sind, genügt schon ein kleiner Bruchteil, nämlich 1/10 bis 1/40, um zusammen mit den überwiegenden Lithium-Carbanionen im Mittel den Einbau von Styrol und Butadien gleich wahrscheinlich zu machen. Ferner besteht die Vorstellung, daß es während des Polymerisationsvorgangs häufig zu einem Metallaustausch zwischen den lebenden Ketten sowie zwischen einer lebenden Kette und dem gelösten Salz kommt, sodaß dieselbe Kette einmal bevorzugt Styrol und dann wieder Butadien addiert. Im Ergebnis sind die Copolymerisationsparameter dann für Styrol und Butadien annähernd gleich. Als Kaliumsalze eignen sich vor allem Kaliumalkoholate, hier insbesondere tertiäre Alkoholate mit mindestens 7 Kohlenstoffatomen. Typische korrespondierende Alkohole sind z.B. 3-Ethyl-3-pentanol und 2,3-Dimethyl-3-pentanol. Als besonders geeignet erwies sich Tetrahydrolinalool (3,7-Dimethyl-3-oktanol). Grundsätzlich geeignet sind neben den Kaliumalkoholaten auch andere Kaliumsalze, die sich gegenüber Metallalkylen inert verhalten. Zu nennen sind hier Dialkylkaliumamide, alkylierte Diarylkaliumamide, Alkylthiolate und alkylierte Arylthiolate.

Wichtig ist der Zeitpunkt, zu dem das Kaliumsalz dem Reaktionsmedium zugegeben wird. Üblicherweise werden zumindest Teile des Lösungsmittels und das Monomer für den ersten Block im Reaktionsgefäß vorgelegt. Es empfiehlt sich nicht, zu diesem Zeitpunkt das Kaliumsalz zuzugeben, da es durch Spuren an protischen Verunreinigungen zumindest teilweise zu KOH und Alkohol hydrolysiert wird. Die Kaliumionen sind dann irreversibel für die Polymerisation desaktiviert. Daher sollte zuerst das Lithiumorganyl zugegeben und eingemischt werden, dann erst das Kaliumsalz. Ist der erste Block ein Homopolymerisat, empfiehlt es sich, das Kaliumsalz erst kurz vor der Polymerisation des statistischen Blocks hinzuzufügen.

Das Kaliumalkoholat kann aus dem entsprechenden Alkohol leicht durch Rühren einer Cyclohexanlösung in Gegenwart von überschüssiger Kalium-Natrium-Legierung hergestellt werden. Nach 24 Stunden bei 25°C ist die Wasserstoffentwicklung und damit die Umsetzung beendet. Die Umsetzung kann aber auch durch Refluxieren bei 80°C auf wenige Stunden verkürzt werden. Als alternative Umsetzung bietet sich an, den Alkohol mit einem geringen Überschuß an Kaliummethylat, Kaliumethylat oder Kaliumtertiärbutylat in Gegenwart eines hochsiedenden inerten Lösungsmittels wie Dekalin oder Ethylbenzol zu versetzen, den niedersiedenden Alkohol, hier Methanol, Ethanol oder Tertiärbutanol abzudestillieren, den Rückstand mit Cyclohexan zu verdünnen und von überschüssigem schwerlöslichem Alkoholat abzufiltrieren.

Der Anteil an 1,2-Verknüpfungen im Verhältnis zur Summe aus 1,2- und 1,4-Verknüpfungen des Diens erreicht durch den Zusatz der Kaliumverbindung i.a. zwischen 11 und 9 %. Demgegenüber erreicht der Anteil an 1,2- bzw 1,4-Verknüpfungen der Dieneinheiten bei Verwendung einer Lewis-Base nach der DE-A1-44 20 952 z.B. einen Wert von 15-40 % für die 1,2- und 85-60 % für die 1,4-Verknüpfungen, jeweils bezogen auf die Gesamtmenge an einpolymerisierten Dieneinheiten.

Die Polymerisationstemperatur kann zwischen 0 und 130°C betragen. Bevorzugt wird der Temperaturbereich zwischen 30 und 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60-95, bevorzugt bei 70-90 und besonders bevorzugt bei 80-90 Vol.-%. Die aus den vinylaromatischen Monomeren entstandenen Blöcke A bilden die Hartphase, deren Volumenanteil entsprechend 5-40, bevorzugt 10-30 und besonders bevorzugt 10-20 Vol-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus den (B/A)-Blöcken gebildeten Weichphase und dem Anteil an Dieneinheiten in der Weichphase, der für die Kombination Styrol/ Butadien zwischen 25 und 70 Gew.% liegt.

Durch die den statischen Einbau der vinylaromatischen Verbindungen in den Weichblock des Blockcopolymeren und die Verwendung von Kaliumalkoholaten während der Polymerisation wird die Glasübergangstemperatur (Tg) beeinflußt. Eine Glasübergangstemperatur zwischen -50 und +25°C, bevorzugt -50 bis +5°C ist typisch. Bei den erfindungsgemäßen kaliumkatalysierten statistischen Copolymeren liegt die Glasübergangstemperatur im Schnitt um 2-5° niedriger als bei den entsprechenden Lewis-Base-katalysierten Produkten, weil letztere einen erhöhten Anteil an 1,2-Butadien-Verknüpfungen aufweisen. 1,2-Polybutadien hat eine um 70-90° höhere Glasübergangstemperatur als 1,4-Polybutadien.

Das Molekulargewicht des Blocks A liegt dabei i.a. zwischen 1000 und 200 000, bevorzugt zwischen 3 000 und 80 000 [g/mol]. Innerhalb eines Moleküls können A-Blöcke unterschiedliche Molmasse haben.

Das Molekulargewicht des Blocks (B/A) liegt üblicherweise zwischen 2 000 und 250 000 [g/mol], bevorzugt werden Werte zwischen 5 000 und 150 000 [g/mol].

Auch ein Block (B/A) kann ebenso wie ein Block A innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungs-(Kopplungs-)mittel gebildet. Beispiel für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder Ethylbenzoat geeignet.

Bevorzugte Polymerstrukturen sind A-(B/A)-A; X-[-(B/A)-A]₂ und Y-[-(B/A)-A]₂, wobei der statistische Block (B/A) selbst wieder in Blöcke (B₁/A₁)-(B₂/A₂)-(B₃/A₃)-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks (B/A) in möglichst viele Teilblöcke Bn/An bietet den entscheidenden Vorteil, daß sich auch bei einer sich kontinuierlich ändernden Zusammensetzung (einem Gradienten) innerhalb eines Teilblocks Bₙ/Aₙ, wie er sich in der anionischen Polymerisation unter praktischen Bedingungen nur schwer vermeiden läßt (s.u.), der (B/A)-Block insgesamt wie ein nahezu perfektes statistisches Polymer verhält. Es bietet sich deshalb an, weniger als die theoretische Menge an Kaliumalkoholat zuzusetzen. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden (B/A)-Blöcke eine Restzähigkeit behält und nicht vollständig versprödet.

Die erfindungsgemäßen Blockcopolymeren besitzen ein dem Weich-PVC sehr ähnliches Eigenschaftsspektrum, können jedoch vollkommen frei von migrationsfähigen, niedermolekularen Weichmachern hergestellt werden. Sie sind unter den üblichen Verarbeitungsbedingungen (180 bis 220°C) gegen Vernetzung stabil. Die hervorragende Stabilität der erfindungsgemäßen Polymisaten gegen Vernetzung kann mittels Rheographie eindeutig belegt werden. Die Versuchsanordnung entspricht derjenigen der MVR-Messung. Bei konstanter Schmelzeflußrate wird der Druckanstieg in Abhängigkeit von der Zeit aufgezeichnet. Die erfindungsgemäßen Polymeren zeigen selbst nach 20 min. bei 250°C keinen Druckanstieg und ergeben einen glatten Schmelzestrang, während sich bei einer nach der DE-A1-44 20 952 mit THF hergestellte Vergleichsprobe unter den gleichen Bedingungen der Druck verdreifacht und der Strang ein für Vernetzung typisches stacheldrahtähnliches Aussehen annimmt.

Die erfindungsgemäßen Blockcopolymeren zeichnen sich ferner durch eine hohe Sauerstoffpermeation P_{O} und Wasserdampfpermeation P_{W} von über 2 000 [cm³·100 mm/m²·d·bar] bzw. über 10 [g 100 mm/m²·d·bar] aus, wobei P_{O} die Sauerstoffmenge in cm³ bzw. P_{W} die Wasserstoffmenge in Gramm angibt, die durch 1 m² Folie mit einer Normdicke von 100 mm je Tag und je bar Partialdruckdifferenz hindurchtreten.

Eine hohe Rückstellkraft bei Deformation, so wie man sie bei thermoplastischen Elastomeren beobachtet, eine hohe Transparenz (über 90% bei 10 mm Schichtdicke), eine niedrige Verschweißtemperatur von unter 120°C und ein breiter Schweißbereich (über 5°) bei einer moderaten Klebrigkeit machen die erfindungsgemäßen Blockcopolymeren zu einem geeigneten Ausgangsmaterial für die Herstellung von sogenannten Dehn- oder Stretchfolien, Infusionsschläuchen und anderen extrudierten, spritzgegossenen, thermogeformten oder blasgeformten Fertigteilen, für die hohe Transparenz und Zähigkeit verlangt werden, insbesondere für Anwendungen im Bereich der Medizintechnik.

Die Polymerisation wird mehrstufig durchgeführt und bei monofunktioneller Initiierung z.B. mit der Herstellung des Hartblocks A begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozeß bis zu einem hohen Umsatz (über 99%) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Anschließend wird eine Cyclohexanlösung des Kaliumalkoholats zugegeben. Danach sollten Dien und Vinylaromat möglichst gleichzeitig zugegeben werden. Die Zugabe kann in mehreren Portionen geschehen, z.B. Wärmeabfuhr und vergleichsmäßig durch Zusammensetzung. Durch das Mengenverhältnis von Dien zu vinylaromatischer Verbindung, die Konzentration des Kaliumsalzes sowie die Temperatur wird der statistische Aufbau und die Zusammensetzung des Blocks (B/A) bestimmt. Erfindungsgemäß nimmt das Dien relativ zur Gesamtmasse einschließlich vinylaromatischer Verbindung einen Gewichtsanteil von 25% bis 70% ein. Anschließend kann Block A durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der (B/A)-Block aufgebaut, gefolgt vom A-Block.

Die weitere Aufarbeitung erfolgt nach den üblichen Verfahren. Es empfiehlt sich, dabei in einem Rührkessel zu arbeiten und mit einem Alkohol wie Isopropanol die Carbanionen zu protonieren, vor der weiteren Aufarbeitung in üblicher weise mit CO₂/Wasser schwach sauer zu stellen, das Polymer mit einem Oxidationsinhibitor und einem Radikalfänger (handelsübliche Produkte wie Trisnonylphenylphosphit (TNPP) oder alpha-Tocopherol (Vitamin E bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren. Das Granulat kann wie andere Kautschuksorten mit einem Antiblockmittel wie ®Acrawax, ®Besquare oder ®Aerosil gegen Verkleben geschützt werden.

### Beispiele

Für jedes Beispiel wurde ein simultan heiz- und kühlbarer 50 Liter-Edelstahlautoklav, der mit einem Kreuzbalkenrührer ausgerüstet war, durch Spülen mit Stickstoff, Auskochen mit einer Lösung von sec-Butyllithium und 1,1-Diphenylethylen im Molverhältnis 1:1 in Cyclohexan und Trocknen vorbereitet.

Dann wurden jeweils 22,8 1 Cyclohexan eingefüllt und die in der Tabelle 1 angegebenen Mengen an Initiator, Monomeren und Kaliumalkoholat zugesetzt. Angegeben ist auch die Polymerisationsdauer, Anfangs- und Endtemperatur T_{A} bzw. T_{E}, wobei die Monomerzulaufsdauer stets klein gegen die Polymerisationsdauer war.

Die Temperatur des Reaktionsgemisches wurde durch Heizung oder Kühlung des Reaktormantels gesteuert. Nach Umsetzungsende (Verbrauch der Monomeren) wurde in den Beispielen 1-7 und dem Vergleichsversuch mit Ethanol, im Beispiel 8 mit Ethylformiat und in Beispiel 9 mit epoxidiertem Leinsamenöl bis zur Farblosigkeit bzw. in den Beispielen 11 und 12 bis hellgelb titriert und die Mischung mit einem 1,5-fachen Überschuß an Ameisensäure sauer gestellt. Zuletzt wurden 34 g eines handelsüblichen Stabilisators (®Irganox 3052; Ciba-Geigy/Basel) und 82 g Trisnonylphenylphosphit zugesetzt.

Die Lösung wurde auf einem Entgasungsextruder (drei Dome, Vorwärts- und Rückwärtsentgasung) bei 200°C aufgearbeitet und granuliert. Das Granulat wurde in einem Fluidmischer mit 10 g ®Acrawax als Außenschmierung versetzt.

Für die mechanischen Messungen wurden 2 mm dicke Platten gepreßt (2000C, 3 min) und Normprüfkörper ausgestanzt.

**Tabelle 1:**

| Polymerisation und Analytik linearer S-SB-S-Blockcopolymerer und eines Sternblockcopolymeren (Bsp. 9; Tab. 1a)) | | | | | | |
|---|---|---|---|---|---|---|
| Beispiel Nr. | 1 | 2 | 3 | 4 | 5 | 6 |
| s-BuLi [mmol] | 87,3 | 87,3 | 87,3 | 87,3 | 87,3 | 87,3 |
| Styrol 1 [g] | 1048 | 1048 | 1048 | 1048 | 1048 | 1048 |
| T_{A}/T_{E} [°C] | 40/70 | 40/70 | 40/70 | 40/70 | 40/70 | 40/70 |
| Zeit [min] | 30 | 30 | 30 | 30 | 30 | 30 |
| K-Salz [mmol] | 1,09 | 2,18 | 3,27 | 4,37 | 6,55 | 8,73 |
| Li:K-Verhältnis | 80:1 | 40:1 | 26,7:1 | 20:1 | 13,3:1 | 10:1 |
| Butadien 1 [g] | 1172 | 1172 | 1172 | 1172 | 1172 | 1172 |
| Styrol 2 [g] | 1477 | 1477 | 1477 | 1477 | 1477 | 1477 |
| T_{A}/T_{E}[°C] | 52/75 | 52/75 | 52/75 | 52/75 | 52/75 | 52/75 |
| Zeit [min] | 13 | 13 | 13 | 13 | 13 | 13 |
| Butadien 2 [g] | 1172 | 1172 | 1172 | 1172 | 1172 | 1172 |
| Styrol 3 [g] | 1477 | 1477 | 1477 | 1477 | 1477 | 1477 |
| T_{A}/T_{E}[°C] | 55/76 | 55/76 | 55/76 | 55/76 | 55/76 | 55/76 |
| Zeit [min] | 13 | 13 | 13 | 13 | 13 | 13 |
| Butadien 3 [g] | 1172 | 1172 | 1172 | 1172 | 1172 | 1172 |
| Styrol 4 [g] | 1477 | 1477 | 1477 | 1477 | 1477 | 1477 |
| T_{A}/T_{E}[°C] | 54/75 | 54/75 | 54/75 | 54/75 | 54/75 | 54/75 |
| Zeit [min] | 17 | 17 | 17 | 17 | 17 | 17 |
| Styrol 5 [g] | 1148 | 1148 | 1148 | 1148 | 1148 | 1148 |
| T_{A}/T_{E}[°C] | 70/72 | 70/72 | 70/72 | 70/72 | 70/72 | 70/72 |
| Zeit [min] | 40 | 40 | 40 | 40 | 40 | 40 |
| Mₙ [g/mol.10⁻³] | 130 | 136 | 134 | 131 | 131 | 132 |
| Mₚ [g/mol.10⁻³] | 155 | 156 | 155 | 150 | 150 | 155 |
| M_{w} [g/mol.10⁻³] | 162 | 169 | 172 | 166 | 173 | 186 |
| T_{g,1} [°C] ^{a)} | -72/-30 | -50/0 | 48/0 | -45/0 | -40/-5 | -40-5 |
| T_{g,2} [°C] ^{b)} | 30/89 | 50/90 | 50/90 | 50/90 | 50/90 | 50/90 |

| | | | | | | |
|---|---|---|---|---|---|---|
| a),b) es handelt sich um 2 jeweils über den angegebenen Bereich verlaufende Glasübergangsstufen, die vermutlich den chemisch verschiedenen Polymerbezirken zugeordnet werden können. | | | | | | |

**Tabelle 1a**

| Beispiel/Vergl. | 7 | 8 | 9 | Vergleich |
|---|---|---|---|---|
| s-BuLi [mmol] | 87,3 | 174,6 | 261,9 | 87,3 |
| Styrol 1 [g] | 1048 | 2096 | 2096 | 1048 |
| T_{A}/T_{E}[°C] | 40/70 | 30/75 | 30/75 | 40/70 |
| Zeit [min] | 30 | 25 | 20 | 30 |
| K-Salz [mmol] | 17,46 | 4,37 | 4,37 | 42 ml THF |
| Li:K-Verhältnis | 5:1 | 20:1 | 20:1 | (statt K-Salz) |
| Butadien 1 [g] | 1172 | 1172 | 1172 | 1172 |
| Styrol 2 [g] | 1477 | 1477 | 1477 | 1477 |
| T_{A}/T_{E}[°C] | 52/75 | 52/75 | 52/75 | 52/78 |
| Zeit [min] | 13 | 10 | 10 | 11 |
| Butadien 2 [g] | 1172 | 1172 | 1172 | 1172 |
| Styrol 3 [g] | 1477 | 1477 | 1477 | 1477 |
| T_{A}/T_{E}[°C] | 55/76 | 50/71 | 50/72 | 55/77 |
| Zeit [min] | 13 | 10 | 10 | 12 |
| Butadien 3 [g] | 1172 | 1172 | 1172 | 1172 |
| Styrol 4 [g] | 1477 | 1477 | 1477 | 1477 |
| T_{A}/T_{E}[°C] | 54/75 | 50/70 | 50/71 | 54/76 |
| Zeit [min] | 17 | 14 | 12 | 15 |
| Styrol 5 [g] | 1148 | - | - | 1148 |
| T_{A}/T_{E}[°C] | 70/72 | | | 65/67 |
| Zeit [min] | 40 | | | 30 |
| Koppl.mittel.[g] | - | 6,46^{c)} | 21,34^{d)} | - |
| Mₙ [g/mol.10⁻³] | 124 | 121 | 90 | 117 |
| Mp [g/mol.10⁻³] | 147 | 151 | - | 159 |
| M_{w} [g/mol.10⁻³] | 174 | 150 | 175 | 181 |
| T_{g,1} [°C] ^{a)} | -40/-5 | -45/0 | -45/0 | -32/-2 |
| T_{g,2} [°C] ^{b)} | 50-90 | 50-90 | 50-90 | 50-90 |

| | | | | |
|---|---|---|---|---|
| a), b) vgl. oben | | | | |
| c) Ethylformiat; d) ®Edenol B 316 der Fa. Henkel | | | | |

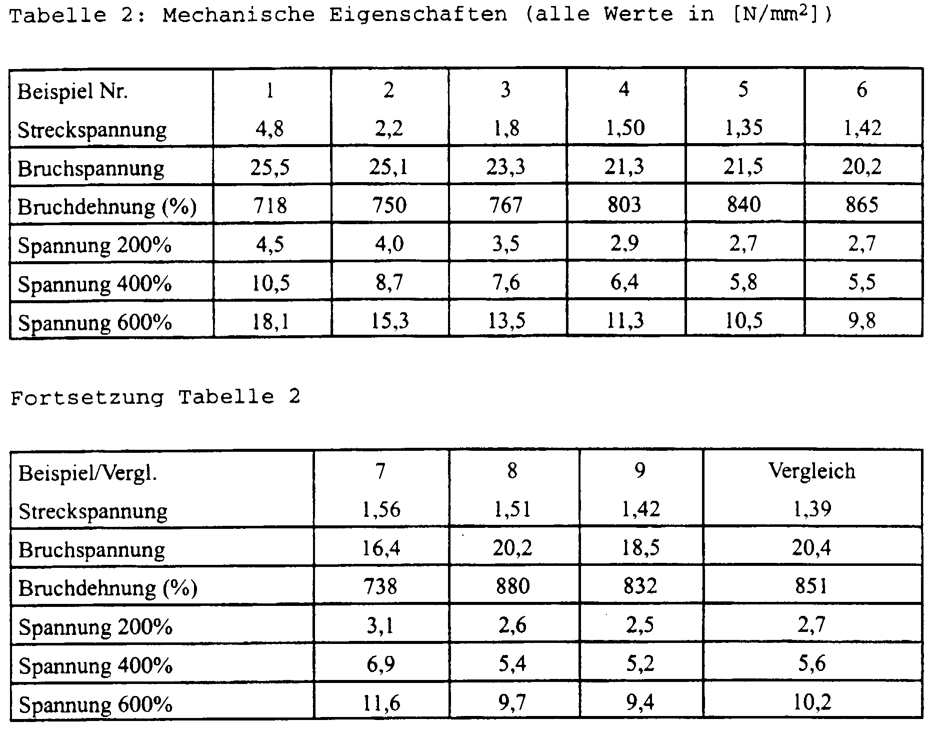

**Tabelle 3:**

| Rheographische Messung (Bestimmung der Thermostabilität) bei 250°C | | |
|---|---|---|
| Zeit [min] | Beispiel 4 Druck [bar] | Vergleichsversuch Druck [bar] |
| 0 | 9 | 10 |
| 10 | 9,5 | 21 |
| 20 | 10 | 38 |
| 30 | 14,5 | 80 |
| 40 | 20 | über Meßbereich |

Die rheographischen Messungen wurden an einem MFI-Gerät der Fa. Göttfert durchgeführt. Bei konstantem Fluß wurde der Druckanstieg verfolgt, der ein Maß für die zunehmende Vernetzung der Probe bei der gewählten Temperatur darstellt. Da die Materialien speziell auch für Dünnfolien geeignet sind, ist ein extrem geringer Gel-gehalt, d.h. geringe Vernetzungsneigung bei einer Verarbeitungstemperatur von z.B. 200 bis 220°C wesentlich.

## Patentansprüche

1. Kautschukelastisches Blockcopolymerisat aus mindestens einem einpolymerisierte Einheiten eines aus vinylaromatischen Monomeren aufgebauten, eine Hartphase bildenden Block A und mindestens einem einpolymerisierte Einheiten eines vinylaromatischen Monomeren sowie eines Diens aufweisenden elastomeren, eine Weichphase bildenden Block (B/A), wobei die Glastemperatur T_{g} des Blocks A über 25°C und die des Blocks B/A unter 25°C liegt und das Phasenvolumen-Verhältnis von Block A zu Block (B/A) so gewählt ist, daß der Anteil der Hartphase am gesamten Blockcopolymerisat 1 bis 40 Vol.-% und der Gewichtsanteil des Diens weniger als 50 Gew.-% beträgt, wobei der relative Anteil an 1,2-Verknüpfungen des Polydiens, bezogen auf die Summe an 1,2- und 1,4-cis/trans-Verknüpfungen unterhalb von 15% liegt.

2. Blockcopolymerisat nach Anspruch 1, dadurch gekennzeichnet, daß der relative Anteil an 1,2-Verknüpfungen des Polydiens unter 12 % liegt.

3. Blockcopolymerisat nach Anspruch 1, dadurch gekennzeichnet, daß T_{g} der Hartphase über 50 und T_{g} der Weichphase unter 5°C liegt.

4. Blockcopolymerisat nach Anspruch 1, dadurch gekennzeichnet, daß das vinylaromatische Monomere ausgewählt ist aus Styrol, -Methylstyrol, Vinyltoluol und 1,1-Diphenylethylen und das Dien aus Butadien und Isopren.

5. Blockcopolymerisat nach Anspruch 1, gekennzeichnet durch ein Molekulargewicht des Blocks B/A zwischen 2 000 und 250 000, des Blocks A zwischen 1 000 und 200 000 [g/mol].

6. Blockcopolymerisat nach Anspruch 1, gekennzeichnet durch eine Monomerzusammensetzung aus 25-60 Gew.% Dien und 75-40 Gew.% an vinylaromatischer Verbindung.

7. Blockcopolymerisat nach Anspruch 6, gekennzeichnet durch eine Brutto-Monomerzusammensetzung aus 75-40 Gew.-% Styrol und 25-60 Gew.-% Butadien.

8. Blockcopolymerisat nach Anspruch 1, gekennzeichnet durch einen Butadienanteil im Weichblock (B/A) zwischen 35 und 70% und einen Styrolanteil zwischen 65 und 30%.

9. Blockcopolymerisat nach Anspruch 1, dadurch gekennzeichnet, daß die Weichphase (B/A) ein statistisches Copolymerisat aus Vinylaromat und Dien ist.

10. Blockcopolymerisat nach Anspruch 1, gekennzeichnet durch eine der allgemeinen Formeln 1 bis 11:
(1) (A-(B/A))ₙ;
(2) (A-(B/A))ₙ-A;
(3) (B/A)-A-(B/A))ₙ;
(4) X-[(A-(B/A))ₙ]ₘ+1;
(5) X-[((B/A)-A)ₙ]ₘ+1;
(6) X-[(A-(B/A))ₙ-A]ₘ+1;
(7) X-[((B/A)-A)ₙ-(B/A)]ₘ+1;
(8) Y-[(A-(B/A))ₙ]ₘ+1;
(9) Y-[((B/A)-A)ₙ]ₘ+1;
(10) Y-[(A-(B/A))ₙ-A]ₘ+1;
(11) Y-[((B/A)-A)ₙ-(B/A)]ₘ+1;
wobei A für den vinylaromatischen Block und (B/A) für den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

11. Blockcopolymerisat nach Anspruch 1, gekennzeichnet durch eine der allgemeinen Formeln Formeln A-(B/A)-A, X-[-(B/A)-A]₂ und Y-[-(B/A)-A]₂.

12. Blockcopolymerisat nach Anspruch 1, gekennzeichnet durch eine Unterteilung der Weichphase (B/A) in mehrere Blöcke der allgemeinen Formeln 12 bis 14:
(12) (B/A)₁-(B/A)₂;
(13) (B/A)₁-(B/A)₂-(B/A)₁;
(14) (B/A)₁-(B/A)₂-(B/A)₃;
wobei die Blöcke innerhalb des Rahmens des Anspruchs 1 unterschiedlich aufgebaut sind.

13. Blockcopolymerisat nach Anspruch 1, dadurch gekennzeichnet, daß mehrere Blöcke (B/A) vorhanden sind und das Vinylaromat/Dien-Verhältnis in den einzelnen Blöcken (B/A) unterschiedlich ist.

14. Blockcopolymerisat nach Anspruch 1, dadurch gekennzeichnet, daß innerhalb eines Blocks (B/A) p sich wiederholende Abschnitte (Teilblöcke) mit wechselndem Monomeraufbau vorhanden sind, wie sie durch p-portionsweise Zugabe der Monomeren gebildet werden, wobei p eine ganzer Zahl zwischen 2 und 10 bedeutet.

15. Blockcopolymerisat nach Anspruch 14, dadurch gekennzeichnet, daß sich die Zusammensetzung innerhalb eines Blocks in den Grenzen des Anspruchs 1 derart ändert, daß in jedem Teilabschnitt (Teilblock) ein Zusammensetzungsgradient (B/A)ₚ₁ << (B/A)ₚ₂ << (B/A)_{p3 .......} vorkommt, wobei die Glasübergangstemperatur T_{g} jedes Teilblocks unter 25°C liegt.

16. Blockcopolymerisat nach Anspruch 1, dadurch gekennzeichnet, daß mehrere Blöcke (B/A) und/oder A mit jeweils unterschiedlicher Molmasse je Molekül vorhanden sind.

17. Verfahren zur Herstellung eines Blockcopolymerisats nach Anspruch 1 durch anionische Polymerisation mittels Lithiumalkyl in einem nicht polaren Lösungsmittel, dadurch gekennzeichnet, daß die Polymerisation mindestens der Weichphase (B/A) in Gegenwart eines löslichen Kaliumsalzes vorgenommen wird.

18. Verfahren nach Anspruch 17, dadurch gekennzeichnet, daß als Kaliumsalz ein Kaliumalkoholat eines tertiären Alkohols mit mindestens 7 Kohlenstoffatomen eingesetzt wird.

19. Verfahren nach Anspruch 17, dadurch gekennzeichnet, daß als lösliches Kaliumsalz Kalium-2,3-dimethyl-3-pentanolat, Kalium-3,7-dimethyl-3-oktanolat oder Kalium-3-ethyl-3-pentanolat verwendet werden.

20. Verfahren nach Anspruch 17, dadurch gekennzeichnet, daß das Molverhältnis von Lithium zu Kalium 10:1 bis 40:1 beträgt.

21. Verfahren nach Anspruch 17, dadurch gekennzeichnet, daß zur Erzielung eines Zusammensetzungsgradienten entlang des Blocks (B/A) das Molverhältnis von Lithium zu größer als 40:1 oder kleiner als 10:1 gewählt wird.

22. Verfahren nach Anspruch 17, dadurch gekennzeichnet, daß das Kaliumsalz erst kurz vor der Polymerisation des statistischen Blocks zugegeben wird, wobei gegebenenfalls zuerst (weiteres) Lithiumorganyl und dann das Kaliumsalz zugegeben wird.

23. Verwendung eines Blockcopolymerisats nach Anspruch 1 zur Herstellung von Formteilen in Gestalt einer Folie, Schaum, Thermoformling, Spritzgußformling oder Profilextrudat.

## Claims

1. An elastomeric block copolymer comprising at least one block A having polymerized units of a vinylaromatic monomer and forming a hard phase and at least one elastomeric block (B/A) having polymerized units of a vinylaromatic monomer and of a diene and forming a soft phase, the glass transition temperature T_{g} of block A being above 25°C and that of block (B/A) being below 25°C and the phase volume ratio of block A to block (B/A) being chosen so that the proportion of the hard phase in the total block copolymer is from 1 to 40% by volume and the amount of the diene is less than 50% by weight, the relative amount of 1,2 linkages of the polydiene, based on the sum of 1,2- and 1,4-cis/trans-linkages, being less than 15%.

2. A block copolymer as claimed in claim 1, wherein the relative amount of 1,2 linkages of the polydiene is less than 12%.

3. A block copolymer as claimed in claim 1, wherein T_{g} of the hard phase is over 50°C and T_{g} of the soft phase is less than 5°C.

4. A block copolymer as claimed in claim 1, wherein the vinylaromatic monomer is selected from styrene, α-methylstyrene, vinyltoluene and 1,1-diphenylethylene, and the diene from butadiene and isoprene.

5. A block copolymer as claimed in claim 1, wherein the B/A block has a molecular weight of from 2000 to 250,000 [g/mol] and the A block has a molecular weight of from 1000 to 200,000 [g/mol].

6. A block copolymer as claimed in claim 1, which has a monomer composition comprising 25-60% by weight of diene and 75-40% by weight of vinylaromatic compound.

7. A block copolymer as claimed in claim 6, having a gross monomer composition comprising 75-40% by weight of styrene and 25-60% by weight of butadiene.

8. A block copolymer as claimed in claim 1, wherein the soft block (B/A) has a butadiene content of from 35 to 70% and a styrene content of from 65 to 30%.

9. A block copolymer as claimed in claim 1, wherein the soft phase (B/A) is a random copolymer of vinylaromatic and diene.

10. A block copolymer as claimed in claim 1, which is of one of the formulae 1 to 11:
(1) (A-(B/A))ₙ;
(2) (A-(B/A))ₙ-A;
(3) (B/A)-A-(B/A))ₙ;
(4) X-[(A-(B/A))ₙ]ₘ+1;
(5) X-[((B/A)-A)ₙ]ₘ+1;
(6) X-[(A-(B/A))ₙ-A]ₘ+1;
(7) X-[((B/A)-A)ₙ-(B/A)]ₘ+1;
(8) Y-[(A-(B/A))ₙ]ₘ+1;
(9) Y-[((B/A)-A)ₙ]ₘ+1;
(10) Y-[(A-(B/A))ₙ-A]ₘ+1;
(11) Y-[((B/A)-A)ₙ-(B/A)]ₘ+1;
where A is the vinylaromatic block and (B/A) is the block composed randomly of diene and vinylaromatic units, X is the radical of an n-functional initiator, Y is the radical of an m-functional coupling agent and m and n are natural numbers from 1 to 10.

11. A block copolymer as claimed in claim 1, which is of one of the formulae A-(B/A)-A, X-[-(B/A)-A]₂ and Y-[-(B/A)-A]₂.

12. A block copolymer as claimed in claim 1, wherein the soft phase (B/A) is subdivided into a plurality of blocks of the formulae 12 to 14:
(12) (B/A)₁-(B/A)₂;
(13) (B/A)₁-(B/A)₂-(B/A)₁;
(14) (B/A)₁-(B/A)₂-(B/A)₃;
where the blocks have different compositions within the ranges of claim 1.

13. A block copolymer as claimed in claim 1, wherein a plurality of blocks (B/A) are present and the vinylaromatic/diene ratio is different in the individual blocks (B/A).

14. A block copolymer as claimed in claim 1, wherein p repeating segments (part-blocks) with changing monomer composition are present within a block (B/A), as formed by addition of p portions of the monomers, where p is an integer from 2 to 10.

15. A block copolymer as claimed in claim 14, wherein the composition within a block changes within the limits of claim 1 in such a way that a composition gradient (B/A)ₚ₁ < <(B/A)ₚ₂ << (B/A)_{p3 ·······} occurs in each segment (part-block), the glass transition temperature T_{g} of each part-block being less than 25°C.

16. A block copolymer as claimed in claim 1, wherein a plurality of blocks (B/A) or A, each having a different molecular weight per molecule, are present.

17. A process for the preparation of a block copolymer as claimed in claim 1 by anionic polymerization by means of lithium alkyl in a nonpolar solvent, wherein the polymerization of at least the soft phase (B/A) is carried out in the presence of a soluble potassium salt.

18. A process as claimed in claim 17, wherein the potassium salt used is a potassium alcoholate of a tertiary alcohol of at least 7 carbon atoms.

19. A process as claimed in claim 17, wherein the soluble potassium salt used is potassium 2,3-dimethyl-3-pentanolate, potassium 3,7-dimethyl-3-octanolate or potassium 3-ethyl-3-pentanolate.

20. A process as claimed in claim 17, wherein the molar ratio of lithium to potassium is from 10:1 to 40:1.

21. A process as claimed in claim 17, wherein, in order to achieve a composition gradient along the block (B/A), the molar ratio of lithium to potassium is chosen to be greater than 40:1 or less than 10:1.

22. A process as claimed in claim 17, wherein the potassium salt is added only shortly before the polymerization of the random block, if necessary first (further) lithium organyl and then the potassium salt being added.

23. The use of a block copolymer as claimed in claim 1 for the production of shaped articles in the form of a film, foam, thermoformed article, injection molded article or extruded profile.

## Revendications

1. Copolymère séquencé caoutchouteux constitué d'au moins un bloc A présentant des unités incorporées par polymérisation d'un monomère vinylaromatique et formant une phase rigide et d'au moins un bloc (B/A) présentant des unités incorporées par polymérisation d'un monomère vinylaromatique de même que d'un diène, élastomère et formant une phase souple, la température de transition vitreuse Tᵥ du bloc A étant supérieure à 25 °C et celle du bloc B/A étant inférieure à 25 °C et le rapport des volumes de phase du bloc A au bloc (B/A) étant choisi de telle manière que la proportion de la phase rigide au copolymère séquencé total représente 1 à 40 % en volume et que la proportion en poids du diène est inférieure à 50 % en poids, la proportion relative des liaisons 1,2 du polydiène étant inférieure à 15 % par rapport à la somme des liaisons 1,2- et 1,4-cis/trans.

2. Copolymère séquencé selon la revendication 1, caractérisé en ce que la proportion relative des liaisons 1,2 du polydiène étant inférieure à 12 %.

3. Copolymère séquencé selon la revendication 1, caractérisé en ce que la Tᵥ de la phase rigide est supérieure à 50 °C et la Tᵥ de la phase souple inférieure à 5 °C.

4. Copolymère séquencé selon la revendication 1, caractérisé en ce que le monomère vinylaromatique est choisi parmi le styrène, l'α-méthylstyrène, le vinyltoluène et le 1,1-diphényléthylène et le diène parmi le butadiène et l'isoprène.

5. Copolymère séquencé selon la revendication 1, caractérisé par un poids moléculaire du bloc B/A entre 2.000 et 250.000 et du bloc A entre 1.000 et 200.000 [g/mole].

6. Copolymère séquencé selon la revendication 1, caractérisé par une composition en monomères de 25 à 60 % en poids de diène et de 75 à 40 % en poids de composé vinylaromatique.

7. Copolymère séquencé selon la revendication 6, caractérisé par une composition brute en monomères de 75 à 40 % en poids de styrène et de 25 à 60 % en poids de butadiène.

8. Copolymère séquencé selon la revendication 1, caractérisé par une proportion en butadiène dans le bloc souple (B/A) entre 35 et 70 % et une proportion en styrène entre 65 à 30 %.

9. Copolymère séquencé selon la revendication 1, caractérisé en ce que la phase souple (B/A) est un copolymère statistique d'un composé vinylaromatique et d'un diène.

10. Copolymère séquencé selon la revendication 1, caractérisé par une des formules générales 1 à 11 :
(1) (A-(B/A))ₙ ;
(2) (A-(B/A))ₙ-A ;
(3) (B/A)-A-(B/A))ₙ ;
(4) X-[(A-(B/A))ₙ]ₘ+1 ;
(5) X-[((B/A)-A)ₙ]ₘ+1 ;
(6) X-[(A-(B/A))ₙ-A]ₘ+1 ;
(7) X-[((B/A)-A)ₙ-(B/A)]ₘ+1 ;
(8) Y-[(A-(B/A))ₙ]ₘ+1 ;
(9) Y-[((B/A)-A)ₙ]ₘ+1 ;
(10) Y-[(A-(B/A))ₙ-A]ₘ+1 ;
(11) Y-[((B/A)-A)ₙ-(B/A)]ₘ+1 ;
A représentant le bloc vinylaromatique et (B/A) le bloc constitué statistiquement d'unités diéniques et vinylaromatiques, X le résidu d'un initiateur à n fonctions, Y le résidu d'un agent de couplage à m fonctions et m et n des nombres naturels de 1 à 10.

11. Copolymère séquencé selon la revendication 1, caractérisé par une des formules générales A-(B/A)-A, X-[-(B/A)-A]₂ et Y-[-(B/A)-A]₂.

12. Copolymère séquencé selon la revendication 1, caractérisé par une subdivision de la phase souple (B/A) en plusieurs blocs répondant aux formules générales 12 à 14 :
(12) (B/A)₁-(B/A)₂ ;
(13) (B/A)₁-(B/A)₂-(B/A)₁ ;
(14) (B/A)₁-(B/A)₂-(B/A)₃ ;
les blocs présentant des constitutions différentes dans les limites de la revendication 1.

13. Copolymère séquencé selon la revendication 1, caractérisé en ce qu'il y a plusieurs blocs (B/A) et en ce que le rapport composé vinyl-aromatique/diène dans les blocs individuels (B/A) est différent.

14. Copolymère séquencé selon la revendication 1, caractérisé en ce que, à l'intérieur d'un bloc (B/A)ₚ, se trouvent des sections répétitives (blocs partiels) avec une constitution monomère variable, telles qu'elles sont formées par l'addition p-fractionnée des monomères, p représentant un nombre entier entre 2 et 10.

15. Copolymère séquencé selon la revendication 14, caractérisé en ce que la composition à l'intérieur d'un bloc varie dans les limites de la revendication 1 de telle manière que dans chaque section partielle (bloc partiel) se forme un gradient de composition (B/A)ₚ₁ << (B/A)ₚ₂ << (B/A)ₚ₃ ..., la température de transition vitreuse Tᵥ de chaque bloc partiel étant inférieure à 25 °C.

16. Copolymère séquencé selon la revendication 1, caractérisé en ce qu'il y a plusieurs blocs (B/A) et/ou A avec des masses moléculaires différentes par molécule.

17. Procédé de préparation d'un copolymère séquencé selon la revendication 1 par polymérisation anionique au moyen alkyllithium dans un solvant non polaire, caractérisé en ce que la polymérisation au moins de la phase souple (B/A) est effectuée en présence d'un sel de potassium soluble.

18. Procédé selon la revendication 17, caractérisé en ce qu'on utilise à titre de sel de potassium un alcoolate de potassium d'un alcool tertiaire avec au moins 7 atomes de carbone.

19. Procédé selon la revendication 17, caractérisé en ce qu'on utilise à titre de sel de potassium du 2,3-diméthyl-3-pentanolate de potassium, du 3,7-diméthyl-3-octanolate de potassium ou du 3-éthyl-3-pentanolate de potassium.

20. Procédé selon la revendication 17, caractérisé en ce que le rapport molaire du lithium au potassium vaut 10 : 1 40 : 1.

21. Procédé selon la revendication 17, caractérisé en ce que, pour l'obtention d'un gradient de composition le long du bloc (B/A), on choisit un rapport molaire du lithium au potassium supérieur à 40 : 1 ou inférieur à 10 : 1.

22. Procédé selon la revendication 17, caractérisé en ce que le sel de potassium n'est ajouté que peu avant la polymérisation du bloc statistique, en ajoutant le cas échéant d'abord de l'organyle de lithium (supplémentaire) et ensuite le sel de potassium.

23. Utilisation d'un copolymère séquencé selon la revendication 1 pour la fabrication d'objets préformés sous forme d'une feuille, d'une mousse, d'une ébauche thermoformée, d'une ébauche moulée par injection ou d'un produit d'extrusion profilé.
